# EUROPEAN PATENT SPECIFICATION

(11) **EP 3 627 023 B1**
(45) Date of publication and mention of the grant of the patent: **27.10.2021**
(21) Application number: 18195629.3
(22) Date of filing: 20.09.2018
(51) Int. Cl.: F16K 41/04, F16K 43/00, F16K 1/52, F24D 19/10, F16K 27/02, F16K 37/00

(54) **VALVE WITH STUFFING BOX**
VENTIL MIT STOPFBUCHSE
SOUPAPE AVEC PRESSE-ÉTOUPE

(43) Date of publication of application: 25.03.2020
(73) Proprietor: Danfoss A/S, 6430 Nordborg (DK)
(72) Inventor: HØLCK, Poul, 6430 Nordborg (DK); MARKVART, Arne, 6430 Nordborg (DK); CLAUSEN, Anders Østergaard, 6430 Nordborg (DK)
(74) Representative: Patentanwälte Olbricht Buchhold Keulertz

(56) References cited:
- EP-A1- 3 193 050
- EP-A1- 3 193 060
- DE-A1- 4 107 969
- DE-B- 1 299 229
- US-A- 3 260 499

## Description

The invention relates to a valve, e.g. for use as a thermostat valve in a heating or cooling system. In particular, the invention relates to a valve with a valve pin which is arranged movable in a longitudinal direction within a stuffing box.

For example, EP 3 193 060 A1 describes a valve, in particular a heat exchanger valve. Within a housing arrangement, stuffing box means comprising a stuffing box housing are arranged. A pin is slidingly accommodated in the stuffing box means. The stuffing box housing is made of a plastic material and is connected to the housing arrangement by a thread-free connection, which may include a bayonet-connection, a spring ring provided in a circumferentially running grove, a direct connection between the stuffing box housing and the housing arrangement, or a connection by means of a stuffing box holder.

DE 41 07 969 A1 discloses a thermostat valve according to the preamble of claim 1.

It may be considered an object to provide a valve allowing easy and secure mounting of the stuffing box.

This is addressed by a valve according to claim 1. Dependent claims refer to preferred embodiments.

The valve according to the invention has a regulating function dependent on the position of an axially, i.e. in longitudinal direction, movable valve pin.

A valve element, which may preferably be a valve stem, is movable relative to a valve seat to regulate a fluid flow. The valve preferably comprises first and second fluid ports, by which it is connected to a cooling or heating system. By positioning the valve element relative to the valve seat, the valve opening is adjusted, thereby regulating the fluid flow between the fluid ports. The valve seat has a valve seat opening, and the valve element is arranged and shaped to seal the opening in a closed position. By positioning the valve element at a variable distance from the valve seat opening, the fluid flow may be regulated.

A valve pin is arranged to act on the valve element. The valve pin protrudes out of the valve and is moveable in longitudinal direction. By means of the displacement of the valve pin, the setting of the valve element relative to the valve seat is adjusted. Preferably, the valve pin abuts against the valve element. The valve spring may be arranged to act on the valve element against the valve pin, preferably in an opening direction of the valve opening. By arranging the valve pin to protrude out of the valve, a regulating unit, such as a thermostat mounted to the valve, may adjust the valve setting and thus regulate the fluid flow.

According to the invention, the valve pin is movable in a stuffing box. The stuffing box acts as a linear guide for the valve pin, wherein it is fixed with respect to a radial position while remaining movable in axial direction. The stuffing box comprises at least an inner seal provided between the valve pin and the stuffing box to seal an inner portion of the valve, in which the valve element is movable, from the outside. Further, the stuffing box may comprise a lubricant to retain movability of the valve pin. In a preferred embodiment, the stuffing box may comprise at least one cavity for a lubricant.

According to the invention, the stuffing box is mounted to the valve by axially abutting against a stop element secured by a removable mounting element. This construction allows an easy exchange of the stuffing box while securing a reliable mounting thereof.

A construction with an axial abutting stop provides engagement between the stuffing box and the stop only one-sided. Thus, the structure may be kept very simple. Further, a one-sided abutting arrangement also allows the stop element and stuffing box to be easily rotated relative to each other, in particular the stuffing box may remain stationary as the stop element rotates. Preferably, the stuffing box may be mounted spring loaded, i.e. a spring may act on it in axial direction (directly or indirectly via interposed elements) so that the stuffing box is urged against the stop. Thus, the positioning of the stuffing box can be very exact despite the particularly simple construction possible with an only one-sided stop.

The stop element may comprise a part of the removable mounting element and/or may comprise a separate part directly or indirectly secured by the removable mounting element.

According to the invention, the removable mounting element comprises a holding flange to secure the stop element, or to act as a stop element to directly secure the stuffing box. According to the invention, a holding flange of the removable mounting element abuts against a holding ring in longitudinal direction, and the holding ring abuts against the stuffing box in longitudinal direction. Thus, the stop element may be comprised of the holding flange and the holding ring. The holding ring is arranged around the stuffing box.

In preferred embodiments, the removable mounting element may be mounted on the valve by rotation around an axis oriented in the longitudinal direction. It is particularly preferred to mount the removable mounting element by a screw connection. The movable mounting element may be ring-shaped and preferably be arranged to surround a central portion of the valve, particularly the valve element and/or the valve pin. A screw connection preferably comprises threads arranged to surround the valve pin.

Preferably, the removable mounting element may be accessible from a radial direction of the valve. A radial direction should be understood as being perpendicular to the longitudinal (axial) direction defined by movement of the valve pin. Preferably, the removable mounting element comprises an engagement structure allowing mechanical engagement e.g. by a tool from the radial direction to apply a torque to the removable mounting element. In particular, an outer contour of the removable mounting element is preferred to have a polygon shape to allow engagement by a tool from the radial direction to apply torque. This embodiment allows to easily use a tool to fasten and/or unfasten the removable mounting element.

It is particularly preferred to provide a nut as a removable mounting element, in particular a ring nut with inner threads and an e.g. six-sided outer contour.

In preferred embodiments, the valve element may be arranged within a valve insert, which may at least partially be made of a plastic material. The valve element and the valve seat may also be made of a plastic material. It is, however, preferred to use a removable mounting element made of a metal material to obtain a particularly secure mounting. Further preferred, a metal valve top may be provided around the valve insert and the removable mounting element may preferably be mounted to the metal vale top, e.g. by a screw connection.

As already mentioned, the stuffing box comprises an inner seal between the valve pin and a portion of the stuffing box to prevent a flow of liquid along the valve pin. According to the invention, an outer seal is provided between the stuffing box and a valve insert. The valve insert preferably at least partially surrounds the stuffing box. The outer seal completes sealing of the stuffing box both to the inside and outside.

In a preferred embodiment, the stuffing box may comprise at least two portions, preferably separate parts connected to each other. The two portions may be connected e.g. by a form-fitting connection, by an adhesive connection such as by gluing, or by a welding. The portions may be connected to be inseparable, e.g. by gluing, welding or by a non-detachable snap connection. One or both of the stuffing box portions may be made of a plastic material. A first portion may include a first valve pin opening and a second portion may include a second valve pin opening. The valve pin extends through both the first and second valve pin openings. An inner seal of the stuffing box may be provided between the first and second portions. Positioning the inner seal between the two portions and then fixing the portions together makes it particularly easy to assemble the stuffing box.

Preferably, valve pin may be made of metal material. It may further be coated with a material layer to improve corrosion resistance and/or lower a coefficient of friction. The pin may in particular be coated with a lubricant.

In preferred embodiments, the valve pin may comprise a pin stop element. The pin stop element may be any element protruding in radial direction, e.g. a step in the side wall of the pin, or a washer fixed to it. The stuffing box preferably comprises a first and second stopping edge arranged at a distance to each other. The pin stop element is arranged between the first and second stopping edges to thereby limit movement of the valve pin in the longitudinal direction.

In order to maintain a seal between the inner, fluid conducting portion of the valve and the outside, to which the valve pin protrudes, a seal may be provided between the valve element and a surrounding valve sleeve. The seal may be disposed to close in a closing position of the valve element. If the valve element is not in the closing position, the seal may remain open. According to a preferred embodiment, the stuffing box is positioned to prevent the valve element from reaching the closing position, such that the seal remains open if the stuffing box is in place within the valve. In its position, the stuffing box may provide a stop for blocking the valve element from reaching the closing position. As the stuffing box is removed, the valve element is movable into the closing position, and preferably is urged into the closing position by a spring. In this way, a fluid connection with the stuffing box is maintained while it is mounted, but a seal of the inner fluid conducting portion of the valve is retained if the stuffing box is removed.

According to a further preferred embodiment, the valve may comprise a presetting element disposed to adjust a maximum flow through the valve opening. The presetting element may be movable to change the effective free cross-section of a passing opening for the flow through the valve opening. With respect to the fluid flow, the passing opening is preferably arranged in series to the valve seat. The position of the presetting element may determine the maximum flow through the valve without a direct influence on the positioning of the valve element and valve seat.

A handle may be provided, which is accessible from the outside of the valve, to adjust a rotational position of the presetting element. Preferably, the removable mounting element may be removed without a movement of the handle and/or the presetting element. The handle and/or presetting element are preferably mounted apart from the removable mounting element, such that they are not rotated as the removable mounting element is turned. Thus, the setting of the presetting element may be retained even if the mounting element and potentially also the stuffing box is removed. This may greatly facilitate service to the valve, e.g. a change of the stuffing box, because the presetting of the valve is retained and no subsequent adjustment is required.

Preferred embodiments of the invention will now be described with reference to the figures wherein,
- Fig. 1: shows a perspective view of an embodiment of a valve;
- Fig. 2: shows a side view of the valve of figure 1;
- Fig. 3: shows an exploded view of the valve of figure 2;
- Fig. 4: shows a sectional view along A..A in figure 1;
- Fig. 5: shows a further exploded view of the valve of figure 1-4;
- Fig. 6a-6c: show different positions of selected parts of the valve according to figure 1-5 as a stuffing box is removed.

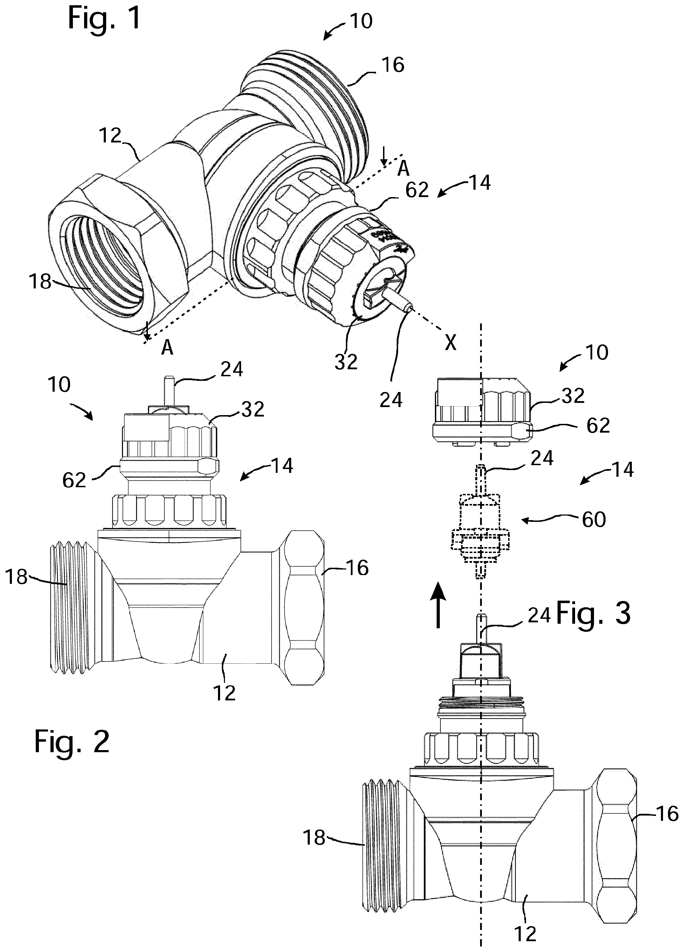

Figures 1-5 show a valve 10 including a valve body 14 inserted in a valve housing 12 with a first fluid port 16 and second fluid port 18.

The depicted embodiment of a valve 10 is the lower half of a thermostat valve which controls the flow of heating fluid from the first fluid port 16 to the second fluid port 18 dependent on the axial movement of a valve pin 24 along a longitudinal axis X. The valve 10 may be connected with its fluid ports 16, 18 between a source of heating fluid and a radiator or floor heating system (not shown). In use of the valve 10, a thermostat (not shown) may be mounted on top of the valve. The thermostat may determine a desired amount of heating fluid to pass through the valve 10. To regulate the fluid flow between the fluid ports 16, 18, the thermostat axially moves the valve pin 24. The thermostat thus sets the axial position of the valve pin 24 according to a desired heat flow, depending on the current room temperature in relation to a selected heating setting.

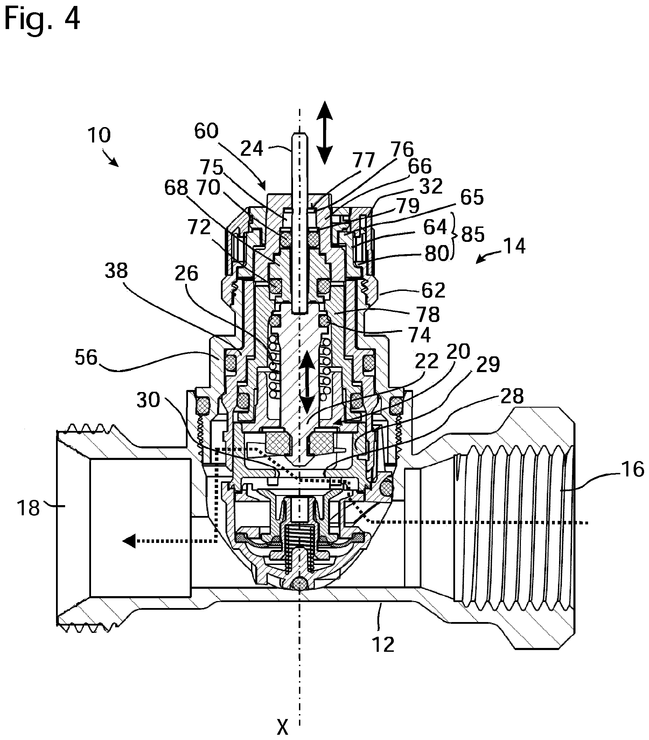

As visible from the longitudinal sectional view of figure 4, the valve pin 24 abuts against a valve element 20 (valve stem 22). The valve pin 24 may depress the valve stem 22 against the action of a spring 26. The valve stem 22 is thus movable in longitudinal direction relative to a valve seat 28 provided as an opening in a valve seat ring 29. The cross-section of a valve opening 30 formed between the end of the valve stem 22 and the valve seat 28 is thus regulated by longitudinal movement of the valve stem 22. As shown as a dotted line in figure 3, fluid from the first fluid port 16 passes through the valve opening 30 to the second fluid port 18.

While the valve 10 is shown in figure 3 in a position to be used for a flow of the heating fluid from the first fluid port 16 to the second fluid port 18, the valve 10 is also useable for reverse flow direction. The entire valve body 14 may be rotated around the longitudinal axis X, so that the flow direction is reversed.

The valve 10 further comprises a presetting function by which a selectable flow resistance is provided. A ring-shaped handle 32 may be manually rotated around the longitudinal axis X. The handle 32 is coupled to a presetting element 3 arranged to surround the valve stem 22 and the valve seat ring 29.

The presetting element 38 is rotatable around the longitudinal axis X. It comprises a radial flow opening (not shown), and the valve seat ring 29 comprises a radial flow channel opening (not shown). By relative rotational positioning of the presetting element 38 relative to the valve seat ring 29, the flow opening and flow channel opening can be brought into different overlap positions, thereby selecting the size of the effective cross-section available for the fluid flow.

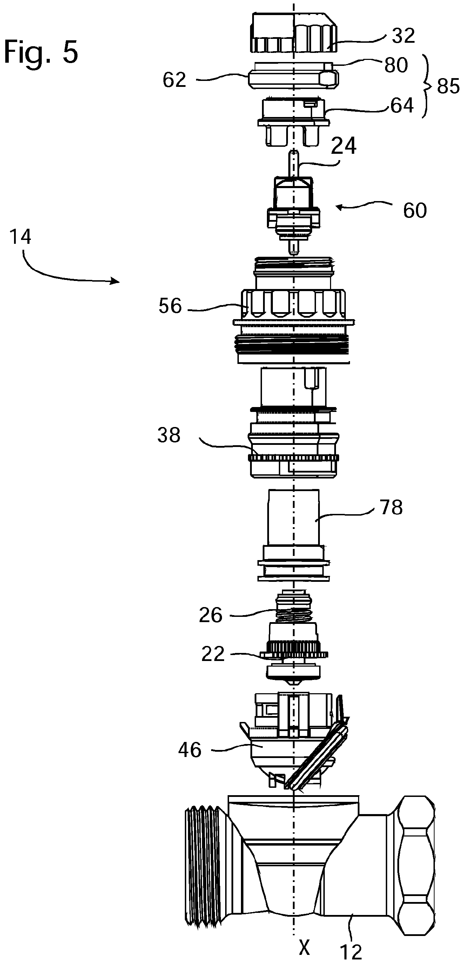

Fig. 5 shows in an exploded view the parts of the valve body 14, which comprises a lower part 46, the valve stem 22, a valve sleeve 78 in which the valve stem 22 is arranged, a valve top 56, a stuffing box 60 with the valve pin 24, a holding ring 64, a removable mounting element 62 and the handle 32. The valve housing 12, valve top 56 and the removable mounting element 62 are made of metal, whereas the above mentioned elements of the valve body 14 are made of a plastic material.

The valve pin 24 is mounted in the stuffing box 60, which is comprised of a first portion 66 and a second portion 68, both made of plastic, with an inner seal 70 provided between the first and second portion 66, 68 to seal against the valve pin 24 and an outer seal 72 in a groove formed in the second portion 68 to seal against the valve sleeve 78, which in the mounted position of the stuffing box 60 surrounds a part of the second portion 68 (see e.g. Fig. 4). The valve pin 24 extends through pin openings formed in both the first and second portions 66, 68.

The stuffing box 60 serves to hold the valve pin 24 in a defined radial position while being movable in axial direction, i.e. along the longitudinal axis X. Further, the stuffing box serves to provide a seal between the inner, fluid conducting portion and the outside of the valve 10.

The stuffing box 60 comprises a cavity 75, which may be filled with a lubricant to keep the valve pin 24 movable.

The valve pin 24 comprises as pin stop element 76 a clamped-on washer positioned within the cavity 75 between a first, upper stop 77 and a second, lower stop 79 provided within the stuffing box 60. The axial movement of the valve pin 24 is limited by the stops 77,79.

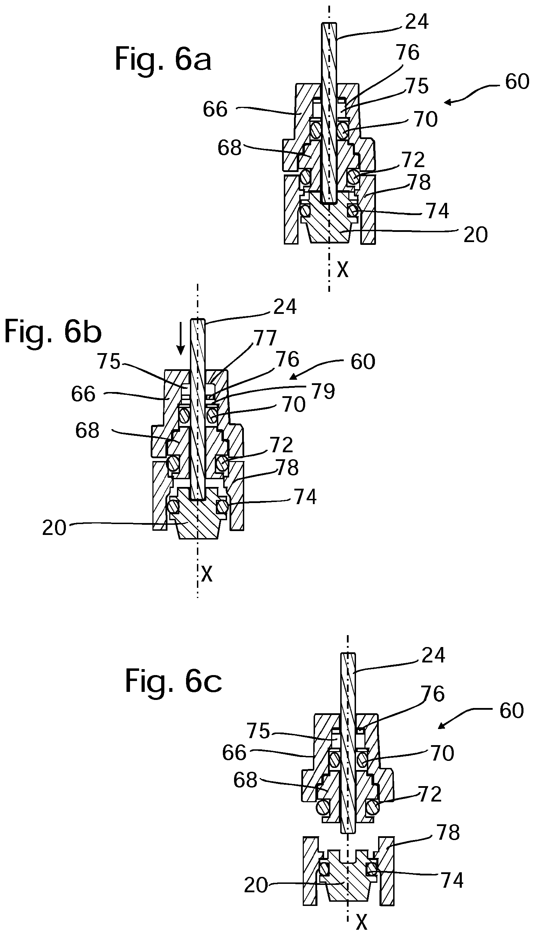

Fig. 6a, 6b show how - in a simplified, partly schematic representation of only some of the elements - the valve stem 20 is positioned via the valve pin 24. Fig. 6a shows the valve stem 20 in its upper stop position, where it abuts against the second portion 68 of the stuffing box 60. It should be noted that in this position the inner, fluid conducting portion of the valve 10 is in contact with the stuffing box 60 and sealing against the outside of the valve 10 is effected by the outer seal 72 of the stuffing box 60. While there is a seal 74 provided on the valve stem 20, this seal 74 is not effective in the upper stop position shown because it is still arranged at a (small) distance to the inner wall of the valve sleeve 78.

Fig. 6b shows how the valve stem 20 is displaced along the longitudinal axis X by movement of the valve pin 24. As shown, the pin stop element 76 is positioned between the first and second stops 77, 79.

The stuffing box 60 is exchangeable within the valve 10. As visible from Fig. 4, it is mounted such that is partly surrounded by the valve sleeve 78 and the connection sealed by its outer seal 72. In the position shown, the valve stem 22 abuts against the stuffing box 60 from below, urged by the spring 26. From above, the stuffing box 60 is fixed in place by a stop element 85, which in the embodiment shown comprises the holding ring 62 and a holding flange 80. The holding ring 62 is fixed by the holding flange 80 of the removable mounting element 62. In the mounted position, the holding ring 64 surrounds the stuffing box and provides an axial stop by means of a flange 65 provided thereon. The holding flange 80 of the removable mounting element 62 acts as an axial stop for the holding ring 64.

The holding ring 64 further serves to connect the handle 32 to the presetting element 38. While it is axially fixed by the holding flange 80, the holding ring 64 is rotatable around the stuffing box 60. It is coupled to the handle 32 above and to the presetting element 38 below such that turning the handle 32 rotates the presetting element 38 to adjust the presetting position as explained above.

In the embodiment shown, the removable mounting element 62 is a ring nut with an outer hexagonal engagement surface and an inner thread. As shown in Fig. 4, it is screwed onto an outer thread provided on the upper end of the metal valve top 56. The removable mounting element 62 thus surrounds a part of the valve body 14, including at least a part of the valve top 56, presetting element 38, valve sleeve 78, valve stem 22 and stuffing box 60. The nut forming the removable mounting element 62 is accessible from radial direction, e.g. for engagement by a wrench to tighten or untighten the screw connection to the valve top 56.

The stuffing box 60 is thus positioned and held within the valve 10 between the holding ring 64 above and the valve sleeve 78 and valve stem 20 below. It should be noted that the contact between the stuffing box 60 and the holding ring 64 (more precisely: the flange 65 thereof) is one-sided only. Thus, as the holding ring 64 is released, the stuffing box 60 is freely movable.

The stuffing box 60 may be exchanged by unscrewing the removable mounting element 62. This may be done by use of a wrench engaged with the nut to rotate the nut relative to the valve top 56. Since the holding ring 64 is held by the removable mounting element 62 only in axial direction by abutting against the holding flange 80, but is not rotationally coupled to the nut, the holding ring 64 does not rotate as the removable mounting element 62 is unscrewed. Thus, also the handle 32 and the presetting element 38 maintain their rotational position if the removable mounting element is removed, thereby retaining the presetting.

By finally removing the removable mounting element 62, the holding ring 64 fixed via the holding flange 80 is released, which allows to take off both the holding ring 64 and the handle 32, such that the stuffing box 60 is also free to be removed.

If the stuffing box 60 is removed, the valve stem 20 can move beyond the upper stop position shown in Fig. 6a (defined by abutting against the stuffing box 60) and is urged by the spring 26 to enter a sealing position shown in Fig. 6c. In the sealing position of the valve stem 20, the seal 74 provided thereon forms a tight seal with the valve sleeve 78, thereby sealing the inner fluid conducting portion of the valve 10 against the outside. Thus, a seal is maintained even if the stuffing box 60 is removed.

## Claims

1. Thermostat valve (10), including
- a valve element (20) moveable relative to a valve seat (28) to adjust a valve opening (30) to regulate a fluid flow,
- wherein a valve pin (24) is arranged to act on said valve element (20), said valve pin (24) protruding out of said valve (10) and being arranged movable in a longitudinal direction (X) within a stuffing box (60),
- wherein said stuffing box (60) is mounted to said valve (10) by axially abutting against a stop element (85) secured by a removable mounting element (62),
- wherein said stuffing box (60) comprises an inner seal (70) provided between the valve pin (24) and the stuffing box (60),
- wherein said stuffing box (60) further comprises an outer seal (72) provided between the stuffing box (60) and a valve insert (14), **characterized in that,**
- said removable mounting element (62) comprises a holding flange, wherein the holding flange (80) abuts against a holding ring (64) in said longitudinal direction (X),
- and said holding ring ( 64) abuts against said stuffing box (60) in said longitudinal direction, wherein said stuffing box (60) is arranged within said holding ring (64).

2. Valve according to claim 1, wherein
- said removable mounting element (62) is mounted on said valve (10) by rotation around said longitudinal direction (X),
- wherein said stuffing box (60) is fixed in its position and does not rotate as said removable mounting element (62) is rotated.

3. Valve according to one of the above claims, wherein
- said removable mounting element (62) is accessible from a radial direction.

4. Valve according to one of the above claims, wherein
- said removable mounting element (62) is mounted on said valve (10) by a screw connection.

5. Valve according to claim 4, wherein
- said screw connection is formed by threads arranged to surround said valve pin (24).

6. Valve according to one of the above claims, wherein
- said valve element (20) is arranged within the valve insert (14) at least partly made of a plastic material,
- and said removable mounting element (62) is made of a metal material.

7. Valve according to one of the above claims, wherein
- at least one cavity (75) comprising a lubricant is arranged within said stuffing box (60).

8. Valve according to one of the above claims, wherein
- said stuffing box (60) comprises a first portion (66) including a first valve pin opening and a second portion (68) including a second valve pin opening, said valve pin (24) extending through said first and second valve pin opening,
- wherein an inner seal (70) is provided between said first and said second portion (66, 68).

9. Valve according to one of the above claims, wherein
- said valve pin (24) comprises a pin stop element (76),
- and said stuffing box (60) comprises a first and a second stopping edge (77, 79) arranged at a distance to each other, said pin stop element (76) being arranged between said first and second stopping edges (77, 79),
- said stopping edges (77, 79) acting together with said pin stop element (76) to limit movement of said valve pin (24) in said longitudinal direction (X).

10. Valve according to one of the above claims, wherein
- a seal (74) is provided between said valve element (20) and a surrounding valve sleeve (78), said valve element (20), said valve sleeve (78) and said seal (74) being disposed such that said seal (74) closes in a closing position of said valve element (20),
- said stuffing box (60) provides a stop blocking said valve element (20) from reaching said closing position,
- wherein said valve element (20) is movable into said closing position as said stuffing box (60) is removed.

11. Valve according to one of the above claims, wherein
- a presetting element (38) is disposed to adjust a maximum flow through said valve opening (30),
- wherein a handle (32) is provided accessible from the outside of said valve (10) to adjust a rotational position of said presetting element (38),
- wherein said removable mounting element (62) is removable without movement of said handle (32) and/ or said presetting element (38).

## Patentansprüche

1. Thermostatventil (10), Folgendes umfassend:
- ein Ventilelement (20), das in Bezug zu einem Ventilsitz (28) beweglich ist, um eine Ventilöffnung (30) anzupassen, um eine Fluidströmung zu regulieren,
- wobei ein Ventilstift (24) dazu angeordnet ist, auf das Ventilelement (20) zu wirken, wobei der Ventilstift (24) aus dem Ventil (10) vorsteht und in eine Längsrichtung (X) in einer Stopfbuchse (60) beweglich angeordnet ist,
- wobei die Stopfbuchse (60) an dem Ventil (10) montiert ist, indem sie axial an einem Anschlagelement (85) anschlägt, das durch ein abnehmbares Montageelement (62) fixiert ist,
- wobei die Stopfbuchse (60) eine Innendichtung (70) umfasst, die zwischen dem Ventilstift (24) und der Stopfbuchse (60) vorgesehen ist,
- wobei die Stopfbuchse (60) ferner eine Außendichtung (72) umfasst, die zwischen der Stopfbuchse (60) und einem Ventileinsatz (14) vorgesehen ist, **dadurch gekennzeichnet, dass**
- das abnehmbare Montageelement (62) einen Halteflansch umfasst, wobei der Halteflansch (80) an einem Haltering (64) in die Längsrichtung (X) anschlägt,
- und der Haltering (64) in die Längsrichtung an der Stopfbuchse (60) anschlägt, wobei die Stopfbuchse (60) in dem Haltering (64) angeordnet ist.

2. Ventil nach Anspruch 1, wobei
- das abnehmbare Montageelement (62) durch Drehung um die Längsrichtung (X) auf dem Ventil (10) montiert ist,
- wobei die Stopfbuchse (60) an ihrer Position fixiert ist und sich nicht dreht, wenn das abnehmbare Montageelement (62) gedreht wird.

3. Ventil nach einem der vorstehenden Ansprüche, wobei
- das abnehmbare Montageelement (62) aus einer Radialrichtung zugänglich ist.

4. Ventil nach einem der vorstehenden Ansprüche, wobei
- das abnehmbare Montageelement (62) durch eine Schraubverbindung auf dem Ventil (10) montiert ist.

5. Ventil nach Anspruch 4, wobei
- die Schraubverbindung durch ein Gewinde ausgebildet ist, das dazu angeordnet ist, den Ventilstift (24) zu umgeben.

6. Ventil nach einem der vorstehenden Ansprüche, wobei
- das Ventilelement (20) im Ventileinsatz (14) angeordnet ist, der zumindest teilweise aus einem Kunststoffmaterial besteht,
- und das abnehmbare Montageelement (62) aus einem Metallmaterial besteht.

7. Ventil nach einem der vorstehenden Ansprüche, wobei
- mindestens ein Schmiermittel umfassender Hohlraum (75) in der Stopfbuchse (60) angeordnet ist.

8. Ventil nach einem der vorstehenden Ansprüche, wobei
- die Stopfbuchse (60) einen ersten Abschnitt (66) mit einer ersten Ventilstiftöffnung und einen zweiten Abschnitt (68) mit einer zweiten Ventilstiftöffnung umfasst, wobei sich der Ventilstift (24) durch die erste und zweite Ventilstiftöffnung erstreckt,
- wobei eine Innendichtung (70) zwischen dem ersten und zweiten Abschnitt (66, 68) vorgesehen ist.

9. Ventil nach einem der vorstehenden Ansprüche, wobei
- der Ventilstift (24) ein Stiftanschlagelement (76) umfasst,
- und die Stopfbuchse (60) eine erste und eine zweite Anschlagkante (77, 79) umfasst, die voneinander beabstandet angeordnet sind, wobei das Stiftanschlagelement (76) zwischen der ersten und zweiten Anschlagkante (77, 79) angeordnet ist,
- wobei die Anschlagkanten (77, 79) mit dem Stiftanschlagelement (76) zusammenwirken, um die Bewegung des Ventilstifts (24) in die Längsrichtung (X) einzuschränken.

10. Ventil nach einem der vorstehenden Ansprüche, wobei
- eine Dichtung (74) zwischen dem Ventilelement (20) und einer umgebenden Ventilhülse (78) vorgesehen ist, wobei das Ventilelement (20), die Ventilhülse (78) und die Dichtung (74) derart angeordnet sind, dass sich die Dichtung (74) in einer Schließstellung des Ventilelements (20) schließt,
- die Stopfbuchse (60) einen Anschlag vorsieht, der das Ventilelement (20) daran hindert, die Schließstellung zu erreichen,
- wobei das Ventilelement (20) in die Schließstellung beweglich ist, wenn die Stopfbuchse (60) abgenommen wird.

11. Ventil nach einem der vorstehenden Ansprüche, wobei
- ein Voreinstellungselement (38) angeordnet ist, um eine maximale Strömung durch die Ventilöffnung (30) anzupassen,
- wobei ein Griff (32) vorgesehen ist, der von außerhalb des Ventils (10) zugänglich ist, um die Drehstellung des Voreinstellungselements (38) anzupassen,
- wobei das abnehmbare Montageelement (62) ohne Bewegung des Griffs (32) und/oder des Voreinstellungselements (38) abnehmbar ist.

## Revendications

1. Vanne thermostatique (10), comprenant
- un obturateur (20) déplaçable par rapport à un siège de vanne (28) afin d'ajuster une ouverture de vanne (30) pour réguler un écoulement de fluide,
- une goupille de vanne (24) étant prévue pour agir sur ledit obturateur (20), ladite goupille de vanne (24) faisant saillie hors de ladite vanne (10) et étant prévue pour être déplaçable dans une direction longitudinale (X) à l'intérieur d'une boîte à garniture (60),
- ladite boîte à garniture (60) étant installée sur ladite vanne (10) en appui axial contre un élément d'arrêt (85) fixé par un élément d'assemblage amovible (62),
- ladite boîte à garniture (60) comprenant un joint d'étanchéité intérieur (70) placé entre la goupille de vanne (24) et la boîte à garniture (60),
- ladite boîte à garniture (60) comprenant en outre un joint d'étanchéité extérieur (72) placé entre la boîte à garniture (60) et un insert de vanne (14), **caractérisée en ce que**
- ledit élément d'assemblage amovible (62) comprend une collerette de retenue, la collerette de retenue (80) étant en appui contre une bague de retenue (64) dans ladite direction longitudinale (X),
- et ladite bague de retenue (64) étant en appui contre ladite boîte à garniture (60) dans ladite direction longitudinale, ladite boîte à garniture (60) étant placée à l'intérieur de ladite bague de retenue (64) .

2. Vanne selon la revendication 1, dans laquelle
- ledit élément d'assemblage amovible (62) est installé sur ladite vanne (10) par rotation autour de ladite direction longitudinale (X),
- ladite boîte à garniture (60) étant fixée dans sa position et ne tournant pas lorsque ledit élément d'assemblage amovible (62) est mis en rotation.

3. Vanne selon l'une des revendications ci-dessus, dans laquelle
- ledit élément d'assemblage amovible (62) est accessible depuis une direction radiale.

4. Vanne selon l'une des revendications ci-dessus, dans laquelle
- ledit élément d'assemblage amovible (62) est installé sur ladite vanne (10) par un raccord vissé.

5. Vanne selon la revendication 4, dans laquelle
- ledit raccord vissé est formé par des filets prévus pour entourer ladite goupille de vanne (24).

6. Vanne selon l'une des revendications ci-dessus, dans laquelle
- ledit obturateur (20) est placé à l'intérieur de l'insert de vanne (14) au moins partiellement constitué d'une matière plastique,
- et ledit élément d'assemblage amovible (62) est constitué d'un matériau métallique.

7. Vanne selon l'une des revendications ci-dessus, dans laquelle
- au moins une cavité (75) comprenant un lubrifiant est formée à l'intérieur de ladite boîte à garniture (60).

8. Vanne selon l'une des revendications ci-dessus, dans laquelle
- ladite boîte à garniture (60) comprend une première partie (66) comprenant une première ouverture de goupille de vanne et une seconde partie (68) comprenant une seconde ouverture de goupille de vanne, ladite goupille de vanne (24) s'étendant à travers lesdites première et seconde ouvertures de goupille de vanne,
- un joint d'étanchéité intérieur (70) étant placé entre lesdites première et seconde parties (66, 68).

9. Vanne selon l'une des revendications ci-dessus, dans laquelle
- ladite goupille de vanne (24) comprend un élément d'arrêt de goupille (76),
- et ladite boîte à garniture (60) comprend des premier et second bords d'arrêt (77, 79) placés à une certaine distance l'un de l'autre, ledit élément d'arrêt de goupille (76) étant placé entre lesdits premier et second bords d'arrêt (77, 79),
- lesdits bords d'arrêt (77, 79) coopérant avec ledit élément d'arrêt de goupille (76) pour limiter un déplacement de ladite goupille de vanne (24) dans ladite direction longitudinale (X).

10. Vanne selon l'une des revendications ci-dessus, dans laquelle
- un joint d'étanchéité (74) est placé entre ledit obturateur (20) et un manchon de vanne (78) l'entourant, ledit obturateur (20), ledit manchon de vanne (78) et ledit joint d'étanchéité (74) étant disposés de telle sorte que ledit joint d'étanchéité (74) est en position de fermeture lorsque ledit obturateur (20) est en position de fermeture,
- ladite boîte à garniture (60) constitue une butée empêchant ledit obturateur (20) d'atteindre ladite position de fermeture,
- ledit obturateur (20) étant déplaçable jusqu'à ladite position de fermeture lorsque ladite boîte à garniture (60) est retirée.

11. Vanne selon l'une des revendications ci-dessus, dans laquelle
- un élément de préréglage (38) est disposé pour ajuster un écoulement maximal à travers ladite ouverture de vanne (30),
- une poignée (32) étant prévue de façon à être accessible depuis l'extérieur de ladite vanne (10) pour ajuster une position de rotation dudit élément de préréglage (38),
- ledit élément d'assemblage amovible (62) étant amovible sans déplacement de ladite poignée (32) et/ou dudit élément de préréglage (38).
